# EUROPÄISCHE PATENTSCHRIFT

(11) **EP 0 484 648 B1**
(45) Veröffentlichungstag und Bekanntmachung des Hinweises auf die Patenterteilung: **02.11.1994**
(21) Anmeldenummer: 91114909.4
(22) Anmeldetag: 04.09.1991
(51) Int. Cl.: F16F 9/02, F16F 9/34, B23Q 16/00

(54) **Anschlag mit einer Dämpfungseinrichtung**
Limit stop with damping device
Butée avec dispositif d'amortissement

(30) Priorität: 07.11.1990 DE 4035286; 23.11.1990 DE 9015950 U
(43) Veröffentlichungstag der Anmeldung: 13.05.1992
(73) Patentinhaber: Wörner, Helmut, D-73770 Denkendorf (DE)
(72) Erfinder: Wörner, Helmut, W-7306 Denkendorf (DE); Unterhuber, Sebastian, W-7306 Denkendorf (DE)
(74) Vertreter: Vetter, Hans, Dipl.-Phys. Dr.

(56) Entgegenhaltungen:
- DE-A- 2 730 860
- DE-A- 3 629 914
- DE-A- 3 810 754
- US-A- 4 828 446
- MACHINE DESIGN. Bd. 47, Nr. 22, 11. September 1975, CLEVELAND US Seite 146; 'Shock absorbers take the "sudden" out of stops'

## Beschreibung

Die Erfindung betrifft einen Anschlag mit einer Dämpfungseinrichtung, insbesondere für automatische Bearbeitungs- oder Fördervorrichtungen, nach der Gattung des Anspruchs 1.

Ein derartiger Anschlag mit einer Dämpfungseinrichtung ist beispielsweise aus der DE-C-36 29 914 oder der DE-A-38 06 436 bekannt. Zur gedämpften Bewegung des Anschlagglieds weist die Dämpfungseinrichtung dort einen Reibbelag auf, der über eine Einstellvorrichtung mit unterschiedlicher Kraft an das Anschlagglied angepreßt werden kann, um eine Anpassung an mit unterschiedlicher Geschwindigkeit bewegbare und eine unterschiedliche Masse aufweisende Werkstücke, Paletten, Maschinenteile od. dgl. zu bewirken. Würde nämlich die Dämpfung zu schwach eingestellt, so würde das Anschlagglied mit zu großer Geschwindigkeit die Endanschlagstellung erreichen und dort aufprallen, was unerwünschte Erschütterungen der anschlagenden Vorrichtung zur Folge hätte. Andererseits bestünde bei einer zu starken Dämpfung die Gefahr, daß die anschlagende Vorrichtung die Endanschlagstellung nicht erreicht und sich dadurch in einer fehlerhaften Endanschlagstellung befindet, was beispielsweise bei Bearbeitungsvorgängen oder Roboter-Handhabungsvorrichtungen zu unerwünschten und fehlerhaften Vorgängen führen würde. Die bekannten Anschläge sind daher für Einrichtungen wenig geeignet, bei denen sie Vorrichtungen mit sehr unterschiedlicher Geschwindigkeit und/oder sehr unterschiedlicher Masse gedämpft in eine Anschlagposition führen müssen. Da der Anpreßdruck der Reibungselemente in der Praxis nicht ständig an unterschiedliche Bedingungen angepaßt werden kann, eignen sich die bekannten Anschläge nur für Einrichtungen, bei denen die anschlagenden Vorrichtungen immer in einem bestimmten Geschwindigkeitsbereich und/oder Massebereich liegen. Andererseits erweist sich schon eine erstmalige Dämpfungseinstellung, viel mehr noch eine Anpassung der Dämpfungseinstellung an geänderte Bedingungen oft schwierig und lästig.

Aus Machine Design, Bd. 47, Nr. 22, 11.09.1975, S. 146 ist zwar ein pneumatischer Stoßdämpfer als Anschlag bekannt, jedoch ist die dort vorgesehene Rückstellvorrichtung für einen Anschlag der eingangs genannten Gattung wenig geeignet und wenig komfortabel.

Die Aufgabe der vorliegenden Erfindung besteht daher darin, einen Anschlag der eingangs genannten Gattung zu schaffen, bei dem die Einstellung der Dämpfungswirkung trotz unterschiedlicher Masse und/oder unterschiedlicher Geschwindigkeit von zu dämpfenden Vorrichtungen entfällt und bei dem ohne Rückstellfeder eine einfache automatische Rückstellung des Anschlaggliedes möglich ist.

Diese Aufgabe wird erfindungsgemäß durch die kennzeichnenden Merkmale des Anspruch 1 gelöst.

Durch die pneumatische Dämpfungseinrichtung ist eine Einstellung und Anpassung an unterschiedliche Massen und/oder Geschwindigkeiten in weiten Grenzen nicht mehr erforderlich, da der Dämpfungskolben in jedem Falle - auch bei sehr geringer einwirkender Kraft - sicher in seine Endposition geschoben wird, indem die Luft im Dämpfungszylinder auch bei geringer Kraft durch die Drosseleinrichtung entweichen kann. Bei dieser Bewegung wird der Dämpfungskolben nicht durch eine Rückstellfeder gehindert, und eine Rückstellfeder für das Anschlagglied kann entfallen. Unterschiedliche Massen und/oder unterschiedliche Geschwindigkeiten der anschlagenden Vorrichtungen führen lediglich zu einer kürzeren oder längeren Zeit bis zum Erreichen des Endanschlages. Die Dämpfungseinrichtung kann daher grundsätzlich für hohe Geschwindigkeiten bzw. hohe Massen ausgelegt werden und gewährleistet dennoch ein sicheres Erreichen der Endanschlagstellung. Durch die ohnehin vorhandenen Dichtungen des Zylinder-Kolben-Systems kann eine zusätzliche Balgdichtung entfallen, ohne daß zu befürchten wäre, daß eindringende Schmutzpartikel die Dämpfungseigenschaften beeinflussen. Der Stellkolben bewirkt nicht nur die Verschiebung des Anschlaggliedes aus einer Anschlagebene heraus und in diese zurück, sondern steuert zusätzlich noch bei der Bewegung des Anschlaggliedes aus der Anschlagebene heraus automatisch die Rückstellung des Anschlaggliedes in die erste Anschlagstellung.

Durch die in den Unteransprüchen aufgeführten Maßnahmen sind vorteilhafte Weiterbildungen und Verbesserungen des im Anspruch 1 angegebenen Anschlags möglich.

Um bei einer Auslegung für sehr große zu dämpfende Massen eine geringe Bauhöhe beizubehalten, sind wenigstens zwei oder mehrere parallelgeschaltete Dämpfungszylinder nebeneinander vorgesehen. Die Breite der Anordnung ist bei üblichen Fördervorrichtungen im allgemeinen von untergeordneter Bedeutung. Dabei werden in vorteilhafter Weise zwei Dämpfungszylinder an beiden Seiten eines das Stellglied enthaltenden Gehäuses schwenkbar angeordnet, so daß insgesamt nur ein einziges Stellglied benötigt und die Bauhöhe weiterhin dadurch reduziert wird, daß in vertikaler Richtung das Stellglied die Dämpfungszylinder überlappt.

Der Stellkolben selbst weist zweckmäßigerweise eine Rückstellfeder auf, damit bei einer Druckabschaltung das Anschlagglied automatisch in die Anschlagebene zurückbewegt wird.

Die rückstellende Druckleitung mündet zweckmäßigerweise seitlich am Zylinderraum, so daß sie ab einer bestimmten Verstellposition des Stellkolbens automatisch mit fluidischem Druck beaufschlagt wird. Dann verläuft diese Druckleitung wenigstens teilweise durch das Gehäuse und ist über einen flexiblen oder kolbenartigen oder wellenartigen Druckleitungsbereich mit der Druckleitung im Dämpfungszylinder verbunden. Die Ausbildung als kolbenartiger Druckleitungsbereich, der am Gehäuse oder am Dämpfungszylinder angebracht ist und verschiebbar oder dichtend in eine zylinderartige Ausnehmung im jeweils anderen Teil - Dämpfungszylinder oder Gehäuse - eingreift, stellt eine besonders vorteilhafte und kompakte Lösung dar, die zudem für eine Verdrehsicherheit des Dämpfungszylinders sorgt.

In der Ausführung mit zwei schwenkbar zu beiden Seiten eines das Stellglied enthaltenden Gehäuses angeordneten Dämpfungszylindern ist zweckmäßigerweise der wellenartige Druckleitungsbereich als Schwenklagerwelle für die beiden seitlichen Dämpfungszylinder ausgebildet. Hierdurch kann die ohnehin notwendige Schwenklagerwelle, die große Anschlagkräfte aufnehmen kann, noch zusätzlich als eine Relativbewegung zulassende Druckleitung verwendet werden.

In der rückstellenden Druckleitung, insbesondere im kolbenartigen Druckleitungsbereich, ist ein das Fluid nur in Richtung zum Dämpfungszylinder durchlassendes Rückschlagventil vorgesehen. Dieses verhindert, daß durch den Dämpfungskolben Luft in die Druckleitung oder in den Zylinderraum im Gehäuse gepreßt wird.

Die Drosseleinrichtung ist zweckmäßigerweise im stirnseitigen Endbereich des Dämpfungszylinders angeordnet, an dem der Dämpfungskolben in seiner Endanschlagstellung anliegt.

Um bestimmte erforderliche oder wünschenswerte Dämpfungseigenschaften einzustellen bzw. automatisch vorzugeben, weist die Drosseleinrichtung druckabhängig verschiedene Drosselöffnungen auf. Insbesondere enthält die Drosseleinrichtung eine eine erste Drosselöffnung aufweisende erste Drossel, die einen sich bei einem Druckstoß kurzzeitig öffnenden Bypass-Durchgang mit einer zweiten, größeren Drosselöffnung besitzt. Hierdurch wird beim Auftreffen beispielsweise eines Werkstücks auf das Anschlagglied ein erster Stoß durch die größere Drosselöffnung abgemildert, die sich dann automatisch schließt und dann eine stärkere Dämpfung durch die erste Drosselöffnung wirksam werden läßt.

Eine geeignete konstruktive Ausgestaltung einer derartigen Drossel besteht vorzugsweise darin, daß in einem Durchgang durch die erste Drossel ein die konstante Drosselöffnung aufweisendes, zwischen zwei elastischen Dichtungen angeordnetes und einen geringeren Außendurchmesser als der Durchmesser des Durchgangs aufweisendes Drosselelement vorgesehen ist, wobei der Bypass-Durchgang außerhalb der vom Dämpfungskolben abgewandten, durch einen Druckstoß verformbaren und dabei die dichtende Verbindung zwischen dem Drosselelement und der anderen Dichtung aufhebenden Dichtung vorgesehen ist. Das Drosselelement ist dabei zweckmäßigerweise als Lochscheibe ausgebildet. Die automatisch und druckabhängig umschaltende erste Drossel kann dadurch mit Hilfe einfacher und kostengünstiger Bauelemente realisiert werden.

Um die Drosseleigenschaften der Drossel einstellen zu können, z. B. zur Anpassung an sehr unterschiedliche Bereiche von Anschlagkräften oder Anschlaggeschwindigkeiten, weist die erste Drossel zweckmäßigerweise ein ein- und ausschraubbares, den axialen Spielraum für die beiden elastischen Dichtungen und das Drosselelement veränderndes Einstellelement auf.

Um bei geringen Drücken eine zu langsame Bewegung des Dämpfungskolbens zu vermeiden, enthält die Drosseleinrichtung in vorteilhafter Weise eine weitere Drossel, die ein vom Druck im Dämpfungszylinder beaufschlagtes, gegen die Kraft einer Feder verschiebbar in einem Zylinder geführtes Drosselelement aufweist, das in seiner bei höchster Federbelastung erreichten Endstellung einen Drosseldurchgang dichtend verschließt, wobei das Drosselelement einen Spalt zur Zylinderwandung und/oder Durchgangsöffnung aufweist.

Zur Vermeidung von Lärmbelästigungen ist die Drosseleinrichtung mit einem Schalldämpfer versehen. Dieser kann in vorteilhafter Weise in der Drosseleinrichtung integriert sein.

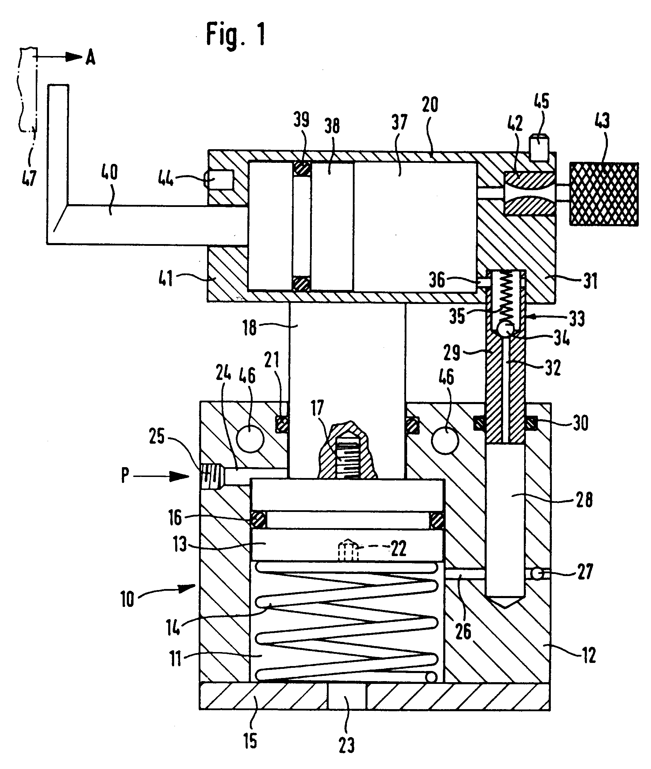

Zwei Ausführungsbeispiele der Erfindung sind in der Zeichnung dargestellt und in der nachfolgenden Beschreibung näher erläutert. Es zeigen:
- Fig. 1: ein erstes Ausführungsbeispiel des Anschlags in einer Vertikalschnittdarstellung ,
- Fig. 2: eine konstruktive Ausgestaltung einer Drosseleinrichtung mit Zwei parallelgeschalteten Drosseln,
- Fig. 3: eine weitere konstruktive Ausgestaltung einer einstellbaren Drosseleinrichtung,
- Fig. 4: ein zweites Ausführungsbeispiel in einer perspektivischen Darstellung,
- Fig. 5: eine Vorderansicht des zweiten Ausführungsbeispiels,
- Fig. 6: eine Draufsicht des zweiten Ausführungsbeisspiels.
- Fig. 7: eine weitere Ausgestaltung einer Drosseleinrichtung
Bei dem in Fig. 1 dargestellten ersten Ausführungsbeispiel eines Anschlags mit einer Dämpfungseinrichtung weist ein pneumatisches Stellglied 10 einen verschiebbar in einem Zylinderraum 11 eines Gehäuses 12 geführten Stellkolben 13 auf. Dieser Stellkolben 13 wird mittels einer Schraubenfeder 14, die zwischen seiner unteren Stirnseite und einem unteren Gehäusedeckel 15 angeordnet ist, in seiner oberen Endposition gehalten. Der Stellkolben 13 ist mittels einer Kolbendichtung 16 dichtend an der Wandung des Zylinderraums 11 geführt.
Ein am Stellkolben 13 zentrisch an seiner oberen Stirnfläche angeordneter Schraubbolzen 17 ist mit einer großzügig dimensionierten Kolbenstange 18 verschraubt, die sich durch die obere Gehäusewandung des Gehäuses 12 hindurch erstreckt und mit ihrem oberen freien Ende an einem Dämpfungszylinder 20 fixiert ist. Eine Dichtung 21 in der oberen Gehäusewandung liegt dichtend an der Kolbenstange 18 an. Zum Verschrauben des Stellkolbens 13 mit der Kolbenstange 18 weist der Stellkolben 13 mittig an seiner unteren Stirnseite eine Schrauböffnung 22 auf, wobei eine entsprechende Bohrung 23 im das Gehäuse 12 unten abschließenden Gehäusedeckel 15 einen Zugriff zu Schrauböffnung 22 gestattet.

Selbstverständlich kann der Stellkolben 13 auch auf andere Weise über die Kolbenstange 18 mit dem Dämpfungszylinder 20 verbunden sein, beispielsweise kann alternativ oder zusätzlich auch eine Schraubverbindung zwischen dem Dämpfungszylinder 20 und der Kolbenstange 18 vorgesehen sein, und der Stellkolben 18 kann auch auf andere Weise an der Kolbenstange 18 fixiert sein, beispielsweise durch einstückige Ausbildung oder durch Verschweißen oder Einpressen.

Eine erste mit einem pneumatischen Steuerdruck P beaufschlagbare Druckleitung 24 verläuft durch eine seitliche Wandung des Gehäuses 12 und mündet an der oberen Kante bzw. an der oberen Stirnfläche des Stellkolbens 13. Ein Schraubanschluß 25 gestattet dabei den Anschluß einer externen Druckleitung.

Etwa in halber Höhe des Zylinderraums 11 verläuft eine zweite Druckleitung 26 zwischen dem Zylinderraum 11 und der Gehäuse-Außenseite des Gehäuses 12 und ist dort durch ein Dichtelement 27 abgedichtet. Von der zweiten Druckleitung 26 aus verläuft eine dritte, zylinderartig ausgebildete Druckleitung 28 vertikal nach oben bis zur Gehäuse-Außenseite. Vom Dämpfungszylinder 20 aus erstreckt sich eine vierte, kolbenartig ausgebildete Druckleitung 29 nach unten und dichtend in die dritte Druckleitung 28 hinein. Zur dichtenden Führung dient dabei eine die vierte Druckleitung 29 umgreifende Dichtung 30.

Die vierte, kolbenartig ausgebildete Druckleitung 29 ist in einer rechten Stirnwandung 31 des waagrecht angeordneten Dämpfungszylinders 20 fixiert, beispielsweise durch Verschrauben, Verschweißen, Verkleben, Verlöten, Einpressen od.dgl. Eine Längsbohrung 32 durch die vierte Druckleitung 29 erweitert sich im oberen Endbereich zu einer Ventilkammer eines Rückschlagventils 33, indem ein kugelförmiger Verschlußkörper 34 mittels einer Feder 35 gegen die Längsbohrung 32 dichtend gedrückt wird. Das Rückschlagventil 33 ist über eine Druckleitung 36 mit einem Zylinderraum 37 des Dämpfungszylinders 20 verbunden, in dem ein Dämpfungskolben 38 verschiebbar geführt und mittels einer Kolbendichtung 39 gegen die Wandung des Zylinderraums 37 abgedichtet ist.

Anstelle der kolbenartigen Druckleitung 29 und der zylinderartigen Druckleitung 28, die ineinander verschiebbar sind, kann der Dämpfungszylinder 20 mit dem Zylinderraum 11 bzw. der zweiten Druckleitung 26 auch beispielsweise über eine flexible Druckleitung verbunden sein. Das Rückschlagventil 33 kann sich in dieser flexiblen Druckleitung befinden, oder aber in der rechten Stirnwandung 31 bzw. im Gehäuse 12.

Am Dämpfungskolben 38 ist ein L-förmiges Anschlagglied 40 angebracht, das durch einen den Zylinderraum 37 auf der linken Seite abschließenden Zylinderdeckel 41 hindurchreicht, wobei der abgewinkelte Schenkel nach oben weist. In Fig. 1 ist die erste Anschlagstellung des Dämpfungskolbens 38 bzw. des Anschlagglieds 40 dargestellt, in der der Dämpfungskolben 38 am Zylinderdeckel 41 anliegt.

In der rechten Stirnwandung 31 des Dämpfungszylinders 20 ist eine nur schematisch dargestellte Drosseleinrichtung 42 angeordnet, die den Zylinderraum 37 mit einem von außen angebrachten Schalldämpfer 43 und über diesen mit der umgebenden Atmosphäre verbindet.

Im Zylinderdeckel 41 ist ein erster Positionssensor 44 zur Erfassung der Annäherung des abgewinkelten Bereichs des Anschlagglieds 40 angeordnet, während in der rechten Stirnwandung 31 ein zweiter, nach oben weisender Positionssensor 45 eingelassen oder angesetzt ist, der das Passieren eines Werkstücks erkennt.

Im Gehäuse 12 sind Befestigungsbohrungen 46 zur Anbringung der gesamten Anordnung an einer Maschine oder einer Förderanlage vorgesehen.

Die Wirkungsweise des in Fig. 1 dargestellten Anschlags besteht darin, daß ein von links kommendes Werkstück 47, das gestrichelt dargestellt ist und auch ein Maschinenteil od.dgl. sein kann, zunächst die erste Anschlagstellung des Anschlagglieds 40 erreicht, wodurch dieses den Dämpfungskolben 38 in den Zylinderraum 37 hineinschiebt. Die verdrängte Luft muß über die Drosseleinrichtung 42 entweichen, wobei der Schalldämpfer 43 eventuell dadurch erzeugte Geräusche, insbesondere bei hartem Auftreffen des Werkstücks 47, unterdrückt. Wegen des Rückschlagventils 33 ist ein Entweichen der Luft zum Gehäuse 12 hin nicht möglich. Durch die Drosseleinrichtung 42 wird daher die Bewegung des Werkstücks 47 gedämpft und abgebremst, so daß es die Endanschlagstellung sanft erreicht, in der der Dämpfungskolben 38 an der rechten Stirnwandung 31 anliegt. Durch den Sensor 44 wird das Erreichen dieser Endanschlagstellung erfaßt und einer nicht dargestellten Steuereinrichtung gemeldet.

Soll das Werkstück 47 seine Bewegung in die dargestellte Richtung A fortsetzen, so wird die erste Druckleitung 24 mit einem Druck P beaufschlagt. Dieser bewirkt, daß sich der Stellkolben 13 gegen die Kraft der Schraubenfeder 14 nach unten bewegt und über die Kolbenstange 18 den Dämpfungszylinder 20 und damit das Anschlagglied 40 ebenfalls nach unten zieht. Das Werkstück 47 kann dadurch passieren.

Wenn die obere Kante des Stellkolbens 13 die Position der zweiten Druckleitung 26 erreicht, wird diese ebenfalls mit dem Druck P beaufschlagt, so daß Druckluft durch die Druckleitungen 28,29 und 36 zum Zylinderraum 37 strömen kann. Das Rückschlagventil 33 öffnet sich dabei automatisch. Hierdurch wird der Dämpfungskolben 38 in seine erste Anschlagstellung zurückgeführt.

Wenn das Werkstück 47 den zweiten Positionssensor 45 erreicht bzw. passiert hat, kann durch die nicht dargestellte Steuervorrichtung der Druck P abgestellt werden, so daß sich der Stellkolben 13 durch die Kraft der Schraubenfeder 17 wieder in die dargestellte Stellung zurückbewegt.

In Abwandlung des dargestellten Ausführungsbeispiels kann der Dämpfungskolben 38 eine zusätzliche Axialführung aufweisen, die sich dichtend durch die rechte Stirnwandung 31 des Dämpfungszylinders 20 erstreckt. Die Gestalt des Anschlagglieds 40 kann variieren, wesentlich ist lediglich, daß sich ein Bereich nach oben über den Dämpfungszylinder 20 hinaus erstreckt.

Zur Vertikalführung des Dämpfungszylinders 20 am Gehäuse 12 können nach Bedarf zusätzliche Vertikalführungen vorgesehen sein. Beispielsweise kann sich auch der Dämpfungszylinder 20 zwischen zwei seitlich anliegenden vertikalen Wandungen bewegen, die mit dem Gehäuse 12 verbunden sind. Die Drosseleinrichtung 42 kann prinzipiell auch im Dämpfungskolben 38 oder im Zylinderdeckel 41 angeordnet sein. Bei einer Anordnung im Zylinderdeckel 41 wird bei einer Dämpfungsbewegung Luft von außen durch die Drosseleinrichtung 42 in den Zylinderraum 32 hineingesaugt.

Es ist prinzipiell auch möglich, die Rückstellung des Stellkolbens 13 statt durch eine Schraubenfeder 14 durch einen Unterdruck am Schraubanschluß 25 oder durch einen Gegendruck an der gegenüberliegenden Seite des Stellkolbens 13 zu bewirken.

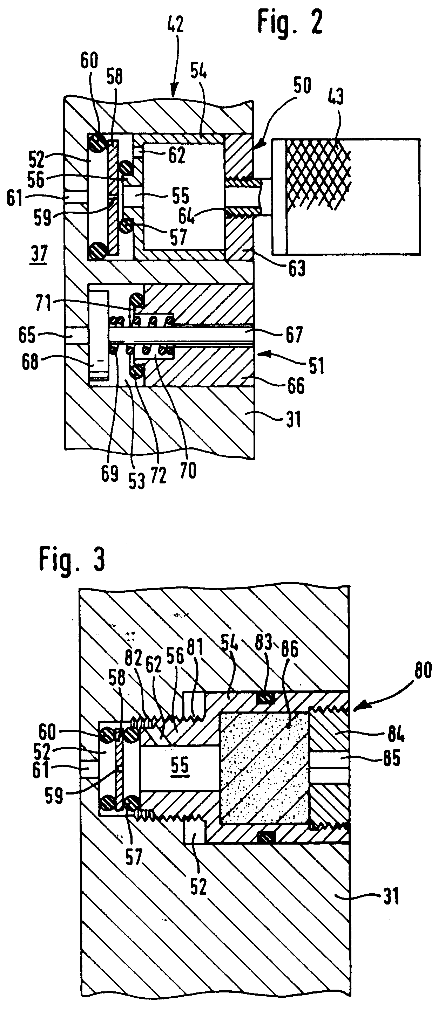

In Fig. 2 ist eine konstruktive Ausgestaltung der Drosseleinrichtung 42 als Beispiel dargestellt. Die Drosseleinrichtung 42 besteht dabei aus zwei parallelgeschalteten Drosseln 50 und 51, die in zylindrischen Ausnehmungen 52,53 in der rechten Stirnwandung 31 des Dämpfungszylinders 20 eingelassen sind.

Die erste Drossel 50 besteht aus einem topfartigen Drosselteil 54, das in die zylindrische Ausnehmung 52 eingepreßt, eingeschraubt, eingeklebt od.dgl. ist, wobei der zum Zylinderraum 37 hin weisende Topfboden eine zentrale Durchgangsöffnung 55 aufweist, die von einem Rohransatzstück 56 umgeben ist. Um das Rohransatzstück herum ist eine überstehende O-Ring-Dichtung 57 angeordnet. Eine Drosselscheibe 58 mit kleiner zentraler Drosselöffnung 59 ist dichtend zwischen der O-Ring-Dichtung 57 und einer gegenüberliegenden O-Ring-Dichtung 60 gehalten, die am Boden der zylindrischen Ausnehmung 52 anliegt. Ein Durchgangskanal 61 verbindet den Zylinderraum 37 mit der zylindrischen Ausnehmung 52. Seitlich im Boden des topfartigen Drosselteils 54 befindet sich eine Durchgangsöffnung 62. Das topfartige Drosselteil 54 ist durch eine Abdeckplatte 63 abgeschlossen, die eine zentrale Einschrauböffnung 64 zum Einschrauben des Schalldämpfers 43 aufweist.

In der zweiten, über einen Durchgangskanal 65 mit dem Zylinderraum 37 verbundenen zylindrischen Ausnehmung 53 ist ein Führungsteil 66 für eine Kolbenstange 67 eines kolbenartigen Teils 68 eingepaßt. Das kolbenartige Teil 68 stützt sich über eine Schraubenfeder 69 am Führungsteil 66 ab und erstreckt sich in eine Halteausnehmung 70 in dieses Führungsteil 66 hinein. Das kolbenartige Teil 68 liegt dadurch am Boden der zylindrischen Ausnehmung 53 an und verschließt den Durchgangskanal 65. Ein die Halteausnehmung 70 umgreifendes Rohransatzstück 71 trägt eine O-Ring-Dichtung 72.

Die Wirkungsweise der in Fig. 2 dargestellten Drosseleinrichtung besteht im wesentlichen darin, daß durch die beiden Drosseln 50,51 eine automatische Anpassung an Werkstücke 47 mit unterschiedlicher Masse und unterschiedlicher Geschwindigkeit erfolgt.

Trifft ein Werkstück 47 mit großer Masse und/oder großer Geschwindigkeit auf das Anschlagglied 40 auf, so entsteht an der Drosseleinrichtung 42 ein großer Druckstoß, der die Drosselscheibe 58 gegen die O-Ring-Dichtung 57 preßt und diese zusammendrückt. Hierdurch wird die Dichtung zwischen der O-Ring-Dichtung 60 und der Drosselscheibe 53 aufgehoben, und die ausströmende Luft kann an der Drosselscheibe 58 vorbei durch die Durchgangsöffnung 62 zum Schalldämpfer 43 bzw. nach außen gelangen. Der erste Druckstoß wird also durch kurzzeitige Verringerung der Dämpfungswirkung abgefangen bzw. kompensiert. Nach dem ersten Druckstoß preßt die O-Ring-Dichtung 57 die Drosselscheibe 58 wieder gegen die O-Ring-Dichtung 60, so daß die ausströmende Luft nur noch durch die kleine zentrale Drosselöffnung 59 ausströmen kann. Hierdurch vergrößert sich der Strömungswiderstand, und die Dämpfungswirkung wird verstärkt.

Ein starker Druckstoß bewirkt bei der Drossel 51, daß sich das kolbenartige Teil 68 gegen die Kraft der Schraubenfeder 69 zur O-Ring-Dichtung 72 bewegt und durch diese den Durchgang für die Luft versperrt. Sinkt die Druckbelastung dann z.B. infolge eines leichteren Werkstücks 47 mit geringer Geschwindigkeit ab, so wird das kolbenartige Teil 68 durch die Feder 69 wieder von der O-Ring-Dichtung 72 weggedrückt, und die Luft kann außen am kolbenartigen Teil 68 vorbei durch Spalte zwischen der Kolbenstange 67 und dem Führungsteil 66 nach außen strömen. Die zweite Drossel 51 bewirkt dadurch, daß bei schwacher Belastung die Dämpfungswirkung abgesenkt wird, um die Zeitdauer bis zum Erreichen der Endanschlagstellung zu verkürzen.

In Fig. 3 ist eine abgewandelte Version der in Fig. 2 dargestellten Drossel 50 abgebildet. Im Gegensatz zur Drossel 50 sind die Drosseleigenschaften der Drossel 80 von außen einstellbar ausgebildet. Gleiche oder gleich wirkende Bauteile sind mit denselben Bezugszeichen versehen und nicht nochmals beschrieben.

Im Unterschied zur Drossel 50 ist bei der Drossel 80 das Rohransatzstück 56 verlängert und mit einem Außengewinde 81 versehen, wobei die zylindrische Ausnehmung 52 in der rechten Stirnwandung 31 zur Aufnahme der Drossel 80 abgestuft ausgebildet ist. Der zum Durchgangskanal 61 weisende Bereich der zylindrischen Ausnehmung 52 mit geringerem Durchmesser weist ein Gewinde 82 auf, in das das Rohransatzstück 56 eingeschraubt werden kann. Die O-Ring-Dichtung 57 ist nunmehr vor dem Rohransatzstück 56 angeordnet und weist im wesentlichen die gleiche Dimensionierung wie die O-Ring-Dichtung 60 auf. Am Außenumfang des topfartigen Drosselteils 54 ist eine O-Ring-Dichtung 83 eingelassen, die zur Abdichtung gegenüber dein Teil der zylindrischen Ausnehmung 52 mit größerem Durchmesser dient. Das topfartige Drosselteil 54 ist an seiner vom Rohransatzstück 56 wegweisenden Stirnseite durch einen Schraubdeckel 84 verschlossen, der mittig eine als Schlüsselaufnahme ausgebildete Ausnehmung 85 aufweist. Der Schraubdeckel 84 ist so fest in das topfartige Drosselteil 54 eingeschraubt, daß bei einer Drehung eines in die Ausnehmung 85 eingesteckten Schlüssels das gesamte topfartige Drosselteil 54 gedreht wird. Hierzu kann der Schraubdeckel 84 auch verstemmt, verklemmt, verklebt oder ähnlich fixiert sein. Im inneren Hohlraum des topfartigen Drosselteils 54 befindet sich ein Schalldämpfer 86, also ein schalldämpfendes, faserartiges Material. Das topfartige Drosselteil 54 ist so dimensioniert, daß es im wesentlichen mit der Außenseite der rechten Stirnwandung 31 fluchtet und nicht darüber hinaussteht.

Selbstverständlich kann auch bei der Drossel 50 gemäß Fig. 2 der Schalldämpfer in der Drossel integriert sein.

Die Wirkungsweise der in Fig. 3 dargestellten Drossel 80 entspricht im wesentlichen der Wirkungsweise der Drossel 50. Durch das im Gewinde 82 durch Drehung mittels eines in die Ausnehmung 85 einsteckbaren Schlüssels ein- und ausschraubbares Rohransatzstück 56 kann die Anlagekraft der O-Ring-Dichtungen 57,60 an der Drosselscheibe 58 bzw. am Rohransatzstück 56 eingestellt werden. Beim Einschrauben vergrößert sich diese Anlagekraft, so daß erst bei höheren Drücken der durch den Durchgangskanal 61 bei der Dämpfungsbewegung entweichenden Luft der Durchgang zur Durchgangsöffnung 62 unter Zusammendrücken der O-Ring-Dichtung 57 freigegeben wird. Durch Einschrauben des topfartigen Drosselteils 54 erhöht sich daher der Drosselwiderstand und verringert sich entsprechend beim Ausschrauben. Hierdurch ist eine Anpassung an sehr unterschiedliche Bereiche von zu dämpfenden Massen möglich.

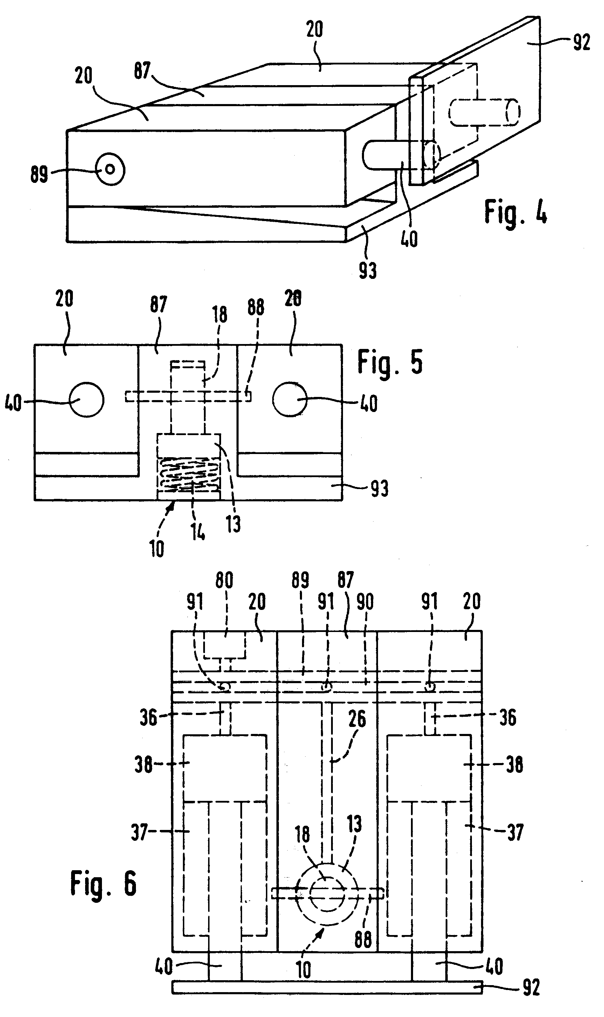

Bei dem in den Fig. 4 bis 6 dargestellten zweiten Ausführungsbeispiel sind zwei Dämpfungszylinder 20 zu beiden Seiten eines Gehäuses 87 mit rechteckigem Querschnitt schwenkbar angeordnet. Das Gehäuse 87 erweitert sich unten zu einem die Dämpfungszylinder 20 untergreifenden Fuß 93. Dieser Fuß weist im vorderen Anschlagbereich eine im Vergleich zum hinteren Bereich geringere Höhe auf, so daß er bei der Schwenkbewegung der Dämpfungszylinder 20 nach unten einen Anschlag bildet. Im vorderen Bereich des Gehäuses 87 ist das Stellglied 10 angeordnet, das im wesentlichen dem Stellglied 10 gemäß Fig. 1 entspricht und daher nicht nochmals detailliert beschrieben ist. Im Unterschied zu Fig. 1 verläuft quer durch die Kolbenstange 18 eine Mitnehmerstange 88, die mit ihren beiden Endbereichen jeweils in die Dämpfungszylinder 20 eingreift. Dadurch werden die beiden Dämpfungszylinder 20 bei einer Druckbeaufschlagung des Kolbens 13 mittels dieser Mitnehmerstange 88 nach unten geschwenkt.

Eine Schwenklagerwelle 89 verläuft quer durch den hinteren Bereich der Dämpfungszylinder 20 und des Gehäuses 87. Diese Schwenklagerwelle ist als Druckleitung ausgebildet, wobei die vom Stellglied 10 kommende Druckleitung 26 im mittleren Bereich der Schwenklagerwelle 89 mündet, während die Druckleitungen 36 mittig und axial durch die Dämpfungszylinder 20 verlaufen und die Zylinderräume 37 mit der Schwenklagerwelle 89 verbinden. Die Schwenklagerwelle 89 weist hierzu einen Axialkanal 90 auf, der an den Anschlußstellen über radiale Bohrungen 91 mit der Außenseite verbunden ist. Im Bereich dieser radialen Bohrungen 91 sind in bekannter Weise Ringkanäle angeordnet, auf deren Darstellung zur Vereinfachung verzichtet wurde. Ebenso verzichtet wurde auf die Darstellung von Dichtungen, die zur dichtenden Lagerung der Schwenklagerwelle 89 im Gehäuse 87 und in den Dämpfungszylindern 20 erforderlich sind. Der Axialkanal 90 ist an seinen äußeren Enden ebenfalls dichtend verschlossen. Auf die Darstellung des Rückschlagventils 33 wurde ebenfalls zur Vereinfachung verzichtet. Ein solches Rückschlagventil 33 kann selbstverständlich in analoger Weise vorgesehen sein. Die linke radiale Bohrung 91 in der Schwenklagerwelle 89 ist mit der Drossel 80 im hinteren Bereich des linken Dämpfungszylinders 20 verbunden. Selbstverständlich kann auch an dieser Stelle die Drosseleinrichtung 42 vorgesehen sein.

Die beiden als Kolbenstangen der Dämpfungskolben 38 ausgebildeten Anschlagglieder 40 sind über eine Anschlagplatte 92 miteinander verbunden, die sich in der dargestellten Ruhestellung nach oben über die Dämpfungszylinder 20 hinaus erstreckt und als Anschlag für ankommende Werkstücke, Paletten, Schlitten od.dgl. dient. Im nach unten geschwenkten Zustand der Dämpfungszylinder 20 gibt die Anschlagplatte 92 die Passage für den sich im Anschlag befindlichen Gegenstand frei.

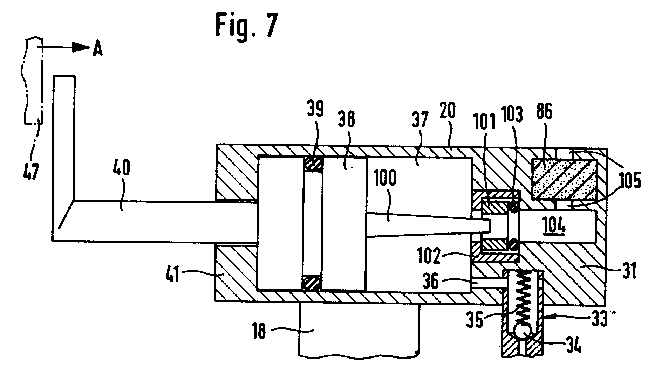

Der in Fig. 7 dargestellte Dämpfungszylinder 20 entspricht weitgehend dem in Fig. 1 dargestellten Dämpfungszylinder 20. Gleiche oder gleich wirkende Bauteile sind mit denselben Bezugszeichen versehen und nicht nochmals beschrieben. Ein entsprechendes Stellglied 10 ist selbstverständlich ebenfalls vorgesehen, wurde jedoch zur Vereinfachung der Darstellung weggelassen.

Bei dem in Fig. 7 dargestellten Dämpfungszylinder 20 ist der Dämpfungskolben 38 an seiner dem Anschlagglied 40 gegenüberstehenden Stirnseite mit einem Drosseldorn 100 versehen, dessen Längsachse mit der Längsachse des Dämpfungszylinders 20 übereinstimmt. In der dargestellten linken Anschlagstellung des Dämpfungskolbens 38 taucht der Drosseldorn 100 geringfügig in eine Drosselöffnung eines zylindrischen Lochelements 101 ein, das mit radialem Spiel in einer Büchse 102 mit zylindrischem Innenraum gehalten wird. Die Büchse 102 ist in eine entsprechende Ausnehmung in der rechten Stirnwandung 31 eingepreßt oder in anderer Weise befestigt. Zur Abdichtung dient ein O-Ring 103 zwischen der vom Dämpfungskolben 38 abgewandten Stirnseite des Lochelements 101 und einem Absatz in der rechten Stirnwandung 31. Von der die Büchse 102 aufnehmenden Ausnehmung aus verläuft in axialer Richtung ein Auslaßkanal 104 durch die rechte Stirnwandung 31, in den bei der Kolbenbewegung der Drosseldorn 100 eintauchen kann. Von diesem Auslaßkanal 104 aus verläuft ein seitlicher Auslaßkanal 105 zur Außenseite des Dämpfungszylinders 20, wobei in diesem seitlichen Auslaßkanal 105 der Schalldämpfer 86 in der rechten Außenwandung 31 integriert angeordnet ist.

Der Auslaß-Drosselquerschnitt wird durch den Spalt zwischen dem Drosseldorn 100 und der Innenwandung des Lochelements 101 vorgegeben. Der Querschnitt des Drosseldorns 100 nimmt dabei zum Dämpfungskolben 38 hin zu, so daß bei einer Dämpfungsbewegung der Dämpfungswiderstand am Ende der Dämpfungsbewegung immer größer wird. Hierdurch können die Dämpfungseigenschaften in Abhängigkeit des Dämpfungswegs optimiert werden. Je nach Anwendungsfall können dabei beliebige Profile des Drosseldorns 100 vorgegeben werden.

Da der Drosselquerschnitt, also der Spalt zwischen dem Drosseldorn 100 und dem Lochelement 101 bei bestimmten konstruktiven Ausgestaltungen nur wenige 1/100 mm betragen kann, ist das Lochelement 101 radial verschiebbar, um ein Führungsspiel ausgleichen zu können.

Die Druckleitung 36 vom Rückschlagventil 33 kann prinzipiell auch im Auslaßkanal 104 münden. Es hängt von den bei der jeweiligen Kosntruktion zur Verfügung stehenden Platzverhältnissen ab. Weiterhin können auch zusätzliche Drosselelemente parallel vorgesehen sein, wie dies beispielsweise in Fig. 2 dargestellt ist. Schließlich kann der in Fig. 7 dargestellte Dämpfungszylinder auch bei einer Konstruktion gemäß den Figuren 4 bis 6 Verwendung finden.

## Patentansprüche

1. Anschlag mit einer Dämpfungseinrichtung, insbesondere für automatische Bearbeitungs- oder Fördervorrichtungen, mit einem mit der Dämpfungseinrichtung verbundenen, von einer ersten Anschlagstellung bis zu einer zweiten Endanschlagstellung gedämpft bewegbaren Anschlagglied, mit einem fluidisch betätigbaren, die mit dem Anschlagglied verbundene Dämpfungseinrichtung senkrecht zur Anschlagrichtung bewegbaren und das Anschlagglied dabei aus einer Anschlagebene heraus und in diese zurück bewegbaren Stellglied,das einen in einem Zylinderraum des Gehäuses fluidisch bewegbaren Stellkolben aufweist, der mit der Dämpfungseinrichtung über ein Verbindungselement verbunden ist,und mit Rückstellmitteln zur Rückstellung des Anschlagglieds von der Endanschlagstellung zur ersten Anschlagstellung, dadurch gekennzeichnet, daß die Dämpfungseinrichtung wenigstens einen in wenigstens einem Dämpfungszylinder (20) bewegbaren Dämpfungskolben (38) aufweist, daß eine die Kolbenbewegung dämpfende, einen Strömungswiderstand für die bei der Kolbenbewegung ein- oder ausströmende Luft bildende Drosseleinrichtung (42; 80) vorgesehen ist, daß die Rückstellmittel als fluidische, im Dämpfungszylinder (20) mündende und bei Druckbeaufschlagung den Dämpfungskolben (38) rückstellende Druckleitung (26, 28, 29, 89, 36) ausgebildet sind, und daß der Stellkolben (13) als Steuerkolben für die rückstellende Druckleitung (26, 28, 29, 89, 36) ausgebildet ist.

2. Anschlag nach Anspruch 1, dadurch gekennzeichnet, daß wenigstens zwei parallelgeschaltete Dämpfungszylinder (20) vorgesehen sind.

3. Anschlag nach Anspruch 2, dadurch gekennzeichnet, daß die Dämpfungszylinder (20) zu beiden Seiten eines das Stellglied (10) enthaltenden Gehäuses (87) schwenkbar angeordnet sind.

4. Anschlag nach einem der vorhergehenden Ansprüche, dadurch gekennzeichnet, daß das Verbindungselement (88) quer zur Bewegungsrichtung des Stellkolbens (13) angeordnet ist und mit seinen beiden Endbereichen in die Dämpfungszylinder (20) eingreift.

5. Anschlag nach einem der vorhergehenden Ansprüche, dadurch gekennzeichnet, daß der Stellkolben (13) mit einer Rückstellfeder (14) versehen ist.

6. Anschlag nach einem der vorhergehenden Ansprüche, dadurch gekennzeichnet, daß die rückstellende Druckleitung (26) seitlich am Zylinderraum (11) mündet und wenigstens teilweise durch das Gehäuse (12; 87) verläuft, und daß ein flexibler oder kolbenartig oder wellenartig geführter Druckleitungsbereich (29; 89) zwischen dem Gehäuse (12; 87) und dem wenigstens einen Dämpfungszylinder (20) angeordnet ist.

7. Anschlag nach Anspruch 6, dadurch gekennzeichnet, daß der kolbenartige Druckleitungsbereich (29) am Gehäuse oder am Dämpfungszylinder (20) angebracht ist und verschiebbar und dichtend in eine zylinderartige Ausnehmung im jeweils anderen Teil - Dämpfungszylinder oder Gehäuse (12) - eingreift, oder daß der wellenartige Druckleitungsbereich (89) als Schwenklagerwelle für die beiden seitlichen Dämpfungszylinder (20) ausgebildet ist.

8. Anschlag nach einem der vorhergehenden Ansprüche, dadurch gekennzeichnet, daß in der rückstellenden Druckleitung (29) ein das Fluid nur in Richtung zum Dämpfungszylinder (20) durchlassendes Rückschlagventil (33) vorgesehen ist, das insbesondere im kolbenartigen Druckleitungsbereich (29) angeordnet ist.

9. Anschlag nach einem der vorhergehenden Ansprüche, dadurch gekennzeichnet, daß die Drosseleinrichtung (42; 80) im Endbereich (31) des Dämpfungszylinders (20) angeordnet ist, an dem der Dämpfungskolben (38) in seiner Endanschlagstellung anliegt.

10. Anschlag nach einem der vorhergehenden Ansprüche, dadurch gekennzeichnet, daß die Drosseleinrichtung (42; 80) druckabhängig verschiedene Drosselöffnungen aufweist.

11. Anschlag nach Anspruch 10, dadurch gekennzeichnet, daß die Drosseleinrichtung eine eine erste Drosselöffnung (59) aufweisende erste Drossel (50; 80) enthält, die einen sich bei einem Druckstoß kurzzeitig öffnenden Bypass-Durchgang mit einer zweiten, größeren Drosselöffnung (62) aufweist.

12. Anschlag nach Anspruch 11, dadurch gekennzeichnet, daß in einem Durchgang (52) durch die erste Drossel (50;80) ein die erste Drosselöffnung (59) aufweisendes, zwischen zwei elastischen Dichtungen (57,60) angeordnetes und einen geringeren Außendurchmesser als der Durchmesser des Durchgangs (52) aufweisendes Drosselelement (58) vorgesehen ist, wobei der Bypass-Durchgang außerhalb der vom Dämpfungskolben (38) abgewandten, durch einen Druckstoß verformbaren und dabei die dichtende Verbindung zwischen dem vorzugsweise als Lochscheibe ausgebildeten Drosselelement (58) und der anderen Dichtung (57) vorgesehen ist.

13. Anschlag nach Anspruch 12, dadurch gekennzeichnet, daß die erste Drossel (80) ein ein- und ausschraubbares, den axialen Spielraum für die beiden elastischen Dichtungen (57,60) und das Drosselelement (58) veränderndes Einstellelement (54) aufweist.

14. Anschlag nach einem der Ansprüche 10 bis 13, dadurch gekennzeichnet, daß die Drosseleinrichtung (42) eine zweite, parallelgeschaltete, bei geringer Druckbelastung die Drosselwirkung verringernde Drossel (61) aufweist.

15. Anschlag nach Anspruch 14, dadurch gekennzeichnet, daß die zweite Drossel (51) ein vom Druck im Dämpfungszylinder (20) beaufschlagtes, gegen die Kraft einer Feder (69) verschiebbar in einem Zylinder (53) geführtes Drosselelement (68) aufweist, das in seiner bei höchster Federbelastung erreichten Endstellung einen Drosseldurchgang dichtend verschließt, wobei das Drosselelement (68) einen Spalt zur Zylinderwandung und/oder Durchgangsöffnungen aufweist.

16. Anschlag nach Anspruch 9, dadurch gekennzeichnet, daß der Dämpfungskolben (38) mit einem in Axialrichtung sich erstreckenden Drosseldorn (100) versehen ist, der in eine Drosselöffnung in dem Endbereich (31) des Dämpfungszylinders (20) eingreift, an dem der Dämpfungskolben (38) in seiner Endanschlagstellung anliegt.

17. Anschlag nach Anspruch 16, dadurch gekennzeichnet, daß der Drosseldorn (100) über seine Länge unterschiedliche Querschnitte aufweist, die vorzugsweise zum Dämpfungskolben (38) hin zunehmen.

18. Anschlag nach Anspruch 16 oder 17, dadurch gekennzeichnet, daß die Drosselöffnung in einem radial verschiebbaren Lochelement (101) angeordnet ist, das insbesondere dichtend in einer Kammer mit größerem Innendurchmesser gegenüber dem Außendurchmesser des Lochelements (101) angeordnet ist.

19. Anschlag nach einem der Ansprüche 16 bis 18, dadurch gekennzeichnet, daß der Endbereich (31) des Dämpfungszylinders (20) einen den Drosseldorn (100) aufnehmenden Auslaßkanal (104) aufweist.

20. Anschlag nach einem der vorhergehenden Ansprüche, dadurch gekennzeichnet, daß der Auslaß der Drosseleinrichtung (42;80) mit einem Schalldämpfer (43;86) versehen ist, der in der Drosseleinrichtung (80) oder in einer Wandung (31) des Dämpfungszylinders (20) integriert oder außen angebracht ist.

21. Anschlag nach einem der vorhergehenden Ansprüche, dadurch gekennzeichnet, daß wenigstens ein die Endanschlagstellung des Anschlagglieds (40;92) und/oder die Position eines passierenden Werkstücks (47) erfassender Positionssensor (44,45) am oder im Dämpfungszylinder (20) angeordnet ist.

## Claims

1. Stop with a damping device, in particular for automatic machining or conveying equipment, with a moveable stop element connected to a damping device, damped from an initial stop position to a second final stop position, with a fluidically-operable actuator moving the damping device connected to the stop element at right-angles to the stop direction and at the same time moving the stop element out of and back into a stop plane, having a fluidically-operable operating piston in a cylinder space of the housing, linked to the damping device by a connection element, and with means of resetting the stop element from the final stop position to the initial stop position, characterized In that the damping device has at least one moveable damping piston (38) in one or more damping cylinders (20), that a flow restrictor (42; 80) damping the piston movement, forming a flow restrictor for the air flowing in or out during the piston movement is provided, that the means of resetting are in the form of a fluidic pressure line (26, 28, 29, 89, 36) emerging in the damping cylinder (20) and resetting the damping piston (38) under pressure, and that the operating piston (13) is designed as actuating piston for the resetting pressure line (26, 28, 29, 89, 36).

2. Stop according to claim 1, characterized in that at least two damping cylinders (20) connected in parallel are provided.

3. Stop according to claim 2, characterized in that the damping cylinders are pivotably mounted on either side of a housing (87) containing the actuator (10).

4. Stop according to any of the preceding claims, characterized in that the connection element (38) is arranged at right-angles to the direction of movement of the operating piston (13) and engages into the damping cylinders (20) at its two ends.

5. Stop according to any of the preceding claims, characterized in that the operating piston (13) is provided with a return spring (14).

6. Stop according to any of the preceding claims, characterized in that the resetting pressure line (26) emerges at the side of the cylinder space (11) and passes at least partially through the housing (12; 87), and that a flexible or piston-like or shaft-like guided pressure line section (29; 89) is located between the housing (12; 87) and at least one of the damping cylinders (20).

7. Stop according to claim 6, characterized in that the piston-like pressure line section (29) is attached to the housing or the damping cylinder (20) and engages slideably and with sealing effect in a cylinder-like recess in the respective other part - damping cylinder or housing (12), or that the shaft-like pressure line section (89) is designed as a swivel bearing shaft for the two side damping cylinders (20).

8. Stop according to any of the preceding claims, characterized in that a non-return valve (31) allowing the passage of fluid only in the direction of the damping cylinder (20) is provided in the resetting pressure line (29), and is located in particular in the piston-like pressure line section (29).

9. Stop according to any of the preceding claims, characterized in that the flow restrictor (42; 80) is located in the end section (31) of the damping cylinder (20), where the damping piston (38) comes to rest in its final stop position.

10. Stop according to any of the preceding claims, characterized in that the flow restrictor (42; 80) has various restrictor orifices depending on pressure.

11. Stop according to claim 10, characterized in that the flow restrictor has a first restrictor (50; 80) with a first restrictor orifice (59), which has a bypass passage with a second, larger restrictor orifice (62) opening temporarily under a pressure shock.

12. Stop according to claim 11, characterized in that there is provided in a passage (52) through the first restrictor (50; 80) a restrictor element (58) with the first restrictor orifice (59), located between two elastic seals (57, 60) and with a smaller outside diameter than the diameter of the passage (52), with the bypass passage provided outside the seal, facing away from the damping piston (38), deformable by a pressure shock and forming the sealing connection between the restrictor element (58) preferably in the form of a punched disc and the other seal (57).

13. Stop according to claim 12, characterized in that the first restrictor (80) has an adjusting element (54) which can be screwed in and out for adjusting the axial clearance for the two elastic seals (57, 60) and the restrictor element (58).

14. Stop according to any of claims 10 to 13, characterized in that the flow restrictor (42) has a second restrictor (61), connected in parallel, for reducing the restrictor effect under low pressure loading.

15. Stop according to claim 14, characterized in that the second restrictor (51) has a restrictor element (68) acted upon by pressure in the damping cylinder (20), slideably guided in a cylinder (53) against the force of a spring (69) which, in its end position reached under maximum spring loading, seals a restrictor passage, wherein the restrictor element (68) has a gap to the cylinder wall and/or passage orifices.

16. Stop according to claim 9, characterized in that the damping piston (38) is provided with an axially-extending restrictor mandrel (100), which engages into a restrictor orifice in the end section (31) of the damping cylinder (20), where the damping piston (38) comes to rest in its final stop position.

17. Stop according to claim 16, characterized in that the restrictor mandrel (100) has varying cross-sections along its length, preferably increasing towards the damping piston (38).

18. Stop according to claims 16 or 17, characterized in that the restrictor orifice is located in a radially-slideable punched element (101), mounted in particular with sealing effect in a chamber with an inside diameter greater than the outside diameter of the punched element (101).

19. Stop according to any of claims 16 to 18, characterized in that the end section (31) of the damping cylinder (20) has an outlet passage (1o4) containing the restrictor mandrel (100).

20. Stop according to any of the preceding claims, characterized in that the outlet of the flow restrictor (42; 80) is provided with a sound absorber (43; 86), integrated with or attached to the outside of the flow restrictor (80) or a side (31) of the damping cylinder (20).

21. Stop according to any of the preceding claims, characterized in that one or more position sensors (44, 45) detecting the final stop position of the stop element (40; 92) and/or the position of a passing workpiece (47) are located on or on the damping cylinder (20).

## Revendications

1. Butée pourvue d'un dispositif d'amortissement, destinée en particulier à des installations automatiques d'usinage ou de transport, comportant un premier organe de butée relié au dispositif d'amortissement, susceptible d'être déplacé de façon amortie d'une première position de butée dans une deuxième position terminale de butée, comportant un organe de réglage susceptible d'être actionné au moyen d'un fluide, pouvant déplacer le dispositif d'amortissement relié à l'organe de butée perpendiculairement au sens de butée, faisant ainsi sortir l'organe de butée d'un plan de butée et pouvant l'y faire revenir, qui présente un piston de réglage, susceptible d'être déplacé au moyen d'un fluide à l'intérieur d'un espace cylindrique du carter, qui est relié au dispositif d'amortissement par l'intermédiaire d'un élément de liaison, et comportant des moyens de rappel destinés au rappel de l'organe de butée de la position terminale de butée à la première position de butée, caractérisée en ce que le dispositif d'amortissement présente au moins un piston amortisseur (38) mobile dans au moins un cylindre amortisseur (20), en ce qu'est prévu un dispositif d'étranglement (42 ; 80) amortissant le déplacement du piston, présentant une résistance à l'écoulement de l'air entrant ou sortant lors du déplacement du piston, en ce que les moyens de rappel sont conformés en conduite de refoulement (26, 28, 29, 89, 36) remplie de fluide, débouchant dans le cylindre amortisseur (20) et faisant revenir le piston amortisseur (38) lorsqu'il y a sollicitation en pression, et en ce que le piston de réglage (13) est conformé en piston de commande destiné à la conduite de refoulement (26, 28, 29, 89, 36) réalisant le rappel.

2. Butée selon la revendication 1, caractérisée en ce que sont prévus au moins deux cylindres amortisseurs (20) montés en parallèle.

3. Butée selon la revendication 2, caractérisée en ce que les cylindres amortisseurs (20) sont montés pivotants de part et d'autre d'un carter (87) logeant l'organe de réglage (10).

4. Butée selon l'une des revendications précédentes, caractérisée en ce que l'élément de liaison (88) est disposé perpendiculairement au sens de déplacement du piston de réglage (13) et s'engage dans le cylindre amortisseur (20) par ses deux zones terminales.

5. Butée selon l'une des revendications précédentes, caractérisée en ce que le piston de réglage (13) est pourvu d'un ressort de rappel (14).

6. Butée selon l'une des revendications précédentes, caractérisée en ce que la conduite de refoulement de retour (26) débouche latéralement dans l'espace cylindrique (11) et s'étend, au moins partiellement, à travers le carter (12 ; 87), et en ce qu'une partie de conduite de refoulement (29 ; 89) flexible ou en forme de piston ou d'arbre s'étend entre le carter (12 ; 87) et le cylindre amortisseur (20), au nombre minimum d'un.

7. Butée selon la revendication 6, caractérisée en ce que la partie de conduite de refoulement (29) en forme de piston est montée sur le carter ou sur le cylindre amortisseur (20) et s'engage, de façon mobile et étanche, dans un évidement de type cylindre ménagé dans respectivement l'autre partie - cylindre amortisseur ou carter (12) - ou en ce que la partie de conduite de refoulement (89) en forme d'arbre est conformée en palier pivotant destiné aux deux cylindres amortisseurs (20) latéraux.

8. Butée selon l'une des revendications précédentes, caractérisée en ce qu'est prévue, dans la conduite de refoulement (29) de retour, une soupape antiretour (33) ne laissant passer le fluide qu'en direction du cylindre amortisseur (20), qui est disposée, en particulier, dans la partie de conduite de refoulement (29) en forme de piston.

9. Butée selon l'une des revendications précédentes, caractérisée en ce que le dispositif d'étranglement (42 ; 80) est disposé dans la zone terminale (31) du cylindre amortisseur (20), contre laquelle le piston amortisseur (38) repose dans sa position terminale de butée.

10. Butée selon l'une des revendications précédentes, caractérisée en ce que le dispositif d'étranglement (42 ; 80) présente, en fonction de la pression, plusieurs positions d'ouverture d'étranglement.

11. Butée selon la revendication 10, caractérisée en ce que le dispositif d'étranglement possède un premier système d'étranglement (50 ; 80) présentant une première ouverture d' étranglement (59), système qui comporte un passage de dérivation s'ouvrant momentanément en cas de coup de bélier, ainsi qu'une deuxième ouverture d'étranglement (62), plus grande.

12. Butée selon la revendication 11, caractérisée en ce qu'est prévu, dans un passage (52) ménagé à travers le premier système d'étranglement (50 ; 80), un élément d'étranglement (58) présentant la première ouverture d'étranglement (59), monté entre deux joints élastiques (57, 60) et possédant un diamètre extérieur inférieur au diamètre du passage (52), le passage de dérivation étant prévu à l'extérieur du joint orienté à l'opposé du piston amortisseur (38), susceptible d'être déformé par un coup de bélier, ce qui supprime ainsi la liaison étanche entre l'élément d'étranglement (58), conformé de préférence en disque ajouré, et l'autre joint (57).

13. Butée selon la revendication 12, caractérisée en ce que le premier système d'étranglement (80) possède un élément de réglage (54) vissable ou dévissable, entraînant une modification du jeu axial des deux joints élastiques (57, 60) et de l'élément d'étranglement (58).

14. Butée selon l'une des revendications 10 à 13, caractérisée en ce que le dispositif d'étranglement (42) possède un deuxième système d'étranglement (61), monté en parallèle, atténuant l'effet d'étranglement lorsque la charge de pression est moins importante.

15. Butée selon la revendication 14, caractérisée en ce que le deuxième système d'étranglement (51) possède un élément d'étranglement (68) actionné par la pression régnant dans le cylindre amortisseur (20), monté mobile, dans un cylindre (53), à l'encontre de la force d'un ressort (69), élément qui obture de façon étanche un passage d'étranglement, dans sa position terminale qu'il atteint en cas de sollicitation maximum par le- ressort, l'élément d'étranglement (68) présentant une fente orientée en direction de la paroi du cylindre et/ou des ouvertures de passage.

16. Butée selon la revendication 9, caractérisée en ce que le piston amortisseur (38) est pourvu d'un mandrin d'étranglement (100) s'étendant dans le sens axial, s'engageant dans une ouverture d'étranglement ménagée dans la zone terminale (31) du cylindre amortisseur (20), contre lequel repose le piston amortisseur (38) dans sa position terminale de butée.

17. Butée selon la revendication 16, caractérisée en ce que le mandrin d'étranglement (100) présente, sur sa longueur, différentes sections transversales, qui vont, de préférence, en augmentant en direction du piston amortisseur (38).

18. Butée selon la revendication 16 ou 17, caractérisée en ce que l'ouverture d'étranglement est ménagée dans un élément ajouré (101) radialement mobile, qui est disposé en particulier de façon étanche dans une chambre présentant un diamètre intérieur plus important que le diamètre extérieur de l'élément ajouré (101).

19. Butée selon l'une des revendications 16 à 18, caractérisée en ce que la zone terminale (31) du cylindre amortisseur (20) présente un canal de décharge (104) logeant le mandrin d'étranglement (100).

20. Butée selon l'une des revendications précédentes, caractérisée en ce que la sortie du dispositif d'étranglement (42 ; 80) est pourvue d'un silencieux (43 ; 86), qui est intégré dans le dispositif d'étranglement (80) ou dans une paroi (31) du cylindre amortisseur (20), ou est disposé à l'extérieur.

21. Butée selon l'une des revendications précédentes, caractérisée en ce qu'au moins un détecteur de position (44, 45), captant la position terminale de butée de l'organe de butée (40 ; 92) et/ou la position d'une pièce à usiner (47) passante, est prévu sur ou dans le cylindre amortisseur (20).
